# EUROPEAN PATENT APPLICATION

(11) **EP 1 924 094 A1**
(43) Date of publication of application: **21.05.2008**
(21) Application number: 07020823.6
(22) Date of filing: 24.10.2007
(51) Int. Cl.: H04N 7/14, H04N 7/15, H04M 3/56

(54) **Mobile communication terminal for video calling and method for saving chat messages thereof**

(30) Priority: 14.11.2006 KR 20060111953
(71) Applicant: Samsung Electronics Co., Ltd., Yeongtong-gu Suwon-si, Gyeonggi-do (KR)
(72) Inventor: Yun, Dong, Sung, Suwon-si Gyeonggi-do (KR)
(74) Representative: Lang, Johannes

(57) **Abstract**

A mobile communication terminal that performs video calling and a method for saving video chat messages are disclosed. The terminal includes a wireless communication unit to send and receive chat messages during a video call, a storage unit to save the chat messages that are sent and received, a display to display the saved chat messages, and a controller to create a file from the saved chat messages when a save notification event is detected while the chat messages are being sent and received. Therefore, users may be able to check the saved chat messages at their convenience and also may manage them more easily because they are saved as files.

## Description

### CROSS REFERENCE TO RELATED APPLICATION

This application claims priority from and the benefit of Korean Patent Application No. 10-2006-0111953, filed November 14, 2006, which is hereby incorporated by reference for all purposes set forth herein.

### BACKGROUND OF THE INVENTION

### FIELD OF THE INVENTION

The present invention relates to a communication technique of a mobile communication terminal, and more particularly, to a mobile communication terminal that performs video calling, and a method for saving a chat message that is sent or received while making a video call on the mobile communication terminal.

### DISCUSSION OF THE BACKGROUND

In view of recent developments, it is desirable that a mobile communication terminal have various functions, including a voice transferring function. Due to recent research and development, mobile communication terminals may now be capable of performing video and audio transmitting and receiving functions.

A conventional mobile communication terminal having a video call function may perform communications in the IMT-2000 wireless network. The IMT-2000 wireless network may be used with 2.5 G and 3 G wireless networks for a WCDMA system, an EVDO system, etc.

In a video calling system, mobile communication terminals exchange moving image streams via a packet-switched network or a circuit-switched network, based on the H.245 protocol for control of such data. Here, the H.245 protocol transmits and receives control messages to control the performance and channel of mobile communication terminals. Such control messages perform capability exchange, opening and closing of a logical channel, mode request, flow control, and general operations, etc. The control messages are also used to support master/slave determination, capability exchange for performances between mobile communication terminals, logical channel signaling, bidirectional logical channel signal, close logical channel signaling mode request, and round-trip delay determination, etc.

The H.245 protocol also controls negotiations of compatibility and quality-of-service (QoS) among mobile communication terminals. Such QoS control negotiations include frame/bit rate adjustment, video size adjustment, and rapid upgrade requests, etc.

When video and voice data, processed through the protocol exchange and negotiation process, is transmitted to comply with a certain data format, video calling may be performed.

Additionally, such video calling may allow a user to chat with another user, by transmitting and receiving a chat message between them. The chat message may be sent or received based on the H.245 protocol.

However, after completing chatting, the sent and received chat messages are deleted from the mobile communication terminals. That is, there has not been a method for checking a sent or received chat message after terminating video calling.

Therefore, a technique for a mobile communication terminal that may save chat messages is needed.

### SUMMARY OF THE INVENTION

The present invention provides a mobile communication terminal that may save chat messages sent and received during video calling and a method for saving the messages in the mobile communication terminal.

The present invention also provides a mobile communication terminal that may save sent and received chat messages after terminating a video call, and a method for saving the messages of the mobile communication terminal.

Additional features of the invention will be set forth in the description which follows, and in part will be apparent from the description, or may be learned by practice of the invention.

The present invention discloses a mobile communication terminal for performing video chat that includes a wireless communication unit to send and receive chat messages during video calling, a storage unit to save the sent and received chat messages, a display to display the saved chat messages; and a controller to create a file from the saved chat messages when a save notification event is detected while a chat message is being sent or received.

The present invention also discloses a method for saving video chat messages of a mobile communication terminal, which includes saving chat messages sent and received during video calling, creating a file from the saved chat messages when a save notification event occurs while a chat message is being sent or received, and saving the created file.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.
FIG. 1 is a schematic block diagram showing a configuration of a mobile communication terminal capable of performing video calling according to an exemplary embodiment of the present invention.
FIG. 2 is a flow chart describing a method for setting a video chat storing mode of a mobile communication terminal according to an exemplary embodiment of the present invention.
FIG. 3 is a flow chart describing a method for saving a chat message of a mobile communication terminal according to an exemplary embodiment of the present invention.
FIG. 4 is a flow chart describing a method for saving a chat message when a signal, indicating that the accumulation save capacity is exceeded, occurs while the method of FIG. 3 is performed.
FIG. 5 is a flow chart describing a method for saving a chat message when a signal, indicating that the video chat is terminated, occurs while the method of FIG. 3 is performed.
FIG. 6 is a flow chart describing a method for saving files created through the methods of FIG. 3 and FIG. 4.
FIG. 7A and FIG. 7B show exemplary displays where the method for setting a video chat storing mode, as shown in FIG. 2, is implemented.
FIG. 8A, FIG. 8B, FIG. 8C, and FIG. 8D show displays, according to an exemplary embodiment of the present invention, where the method for saving a chat message, as shown in FIG. 4, is implemented.
FIG. 9A, FIG. 9B, FIG. 9C, and FIG. 9D show displays, according to another exemplary embodiment of the present invention, where the method for saving a chat message, as shown in FIG. 4, is implemented.
FIG. 10A, FIG. 10B, FIG. 10C, and FIG. 10D show displays in the method for saving created files of FIG. 6 according to an exemplary embodiment of the present invention.
FIG. 11A, FIG. 11B, FIG. 11C, FIG. 11D, and FIG. 11E show displays in the method for saving the created files of FIG. 6 according to another exemplary embodiment of the present invention.
FIG. 12 is a flow chart describing a method for accessing a menu of a video chat storage box.
FIG. 13A, FIG. 13B, and FIG. 13C show displays when the method of FIG. 12 is implemented, according to an exemplary embodiment of the present invention.

### DETAILED DESCRIPTION OF THE ILLUSTRATED EMBODIMENTS

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements.

It will be understood that when an element or layer is referred to as being "on" or "connected to" another element or layer, it can be directly on or directly connected to the other element or layer, or intervening elements or layers may be present. In contrast, when an element is referred to as being "directly on" or "directly connected to" another element or layer, there are no intervening elements or layers present.

Prior to explaining the exemplary embodiments of the present invention, terminologies will be defined for the present description below:
1. Chat message: A message that sends or receives character streams input by users during a video call between mobile communication terminals.
2. Save notification event: An event that is created by a user request or depletion of a storing area while sending or receiving chat messages. Examples of a save notification event include an accumulation save capacity excess notification signal to provide notification of depletion of the chat message storing area, a signal to terminate a video call (i.e., a video call termination signal), and a saving request signal to create a file from sent and received chat messages according to a user request while chat messages are being sent or received.
3. Video chat storing mode: An operation mode in which messages that are sent and/or received among mobile communication terminals during a video call are saved. Examples of an operation mode include a video chat automatic storing mode to automatically save sent and received chat messages and a video chat manual storing mode to manually save sent and received chat messages.
4. File storing area: A storing area to save a file created when chat messages are accumulated and saved. Here, when describing a display in the following exemplary embodiment, the file storing area will be replaced with a term of a video chat storage box and then explained.

Now, exemplary embodiments of the present invention are described in detail with reference to the accompanying drawings.

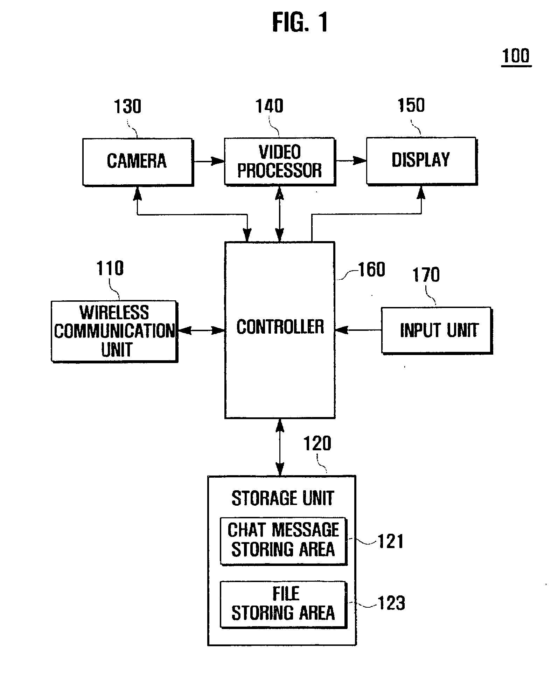

FIG. 1 is a schematic block diagram showing a configuration of a mobile communication terminal that is capable of performing a video call according to an exemplary embodiment of the present invention.

Referring to FIG. 1, the mobile communication terminal 100 includes a wireless communication unit 110, a storage unit 120, a camera 130, a video processor 140, a display 150, a controller 160, and an input unit 170.

The wireless communication unit 110 communicates with other mobile communication terminals. That is, the wireless communication unit 110 transmits and receives video data for a video call and chat messages to and from other mobile communication terminals. More specifically, the wireless communication unit 110 transmits a user's video data and chat messages to other mobile communication terminals, and receives video data and chat messages from other terminals.

The storage unit 120 stores operations and states of the mobile communication terminal 100, as well as programs and data necessary to the operation of the controller 160. Specifically, the storage unit 120 includes a chat message storing area 121 and a file storing area 123. The chat message storing area 121 accumulates and saves chat messages that are sent and received through the wireless communication unit 110. The file storing area 123 saves a file created from the chat messages that are accumulated and saved under the control of the controller 160.

The camera 130 creates a user's video data to be transmitted through the wireless communication unit 110. The camera 130 includes an image sensor to convert an optical signal of an object into an analog signal and a signal processor to convert the analog signal into a digital signal. That is, the camera 130 converts light collected through the lens into a digital signal.

The video processor 140 processes the video data created by the camera 130 and the video data received by the wireless communication unit 110 so that it complies with the standard of the display 150.

The display 150 displays, in real time, the video data of the wireless communication unit 110 or camera 130, which is processed in the video processor 140, thereby enabling the mobile communication terminal 100 to perform a video call or a video shoot. For example, the display 150 displays chat messages that are sent and received under the control of the controller 160. Also, the display 150 displays a notification text in a pop-up format indicating a save notification event.

The controller 160 controls the operations of respective elements included in the mobile communication terminal 100. In particular, when a save notification event is detected during the transmission or reception of chat messages, the controller 160 creates a file from the chat messages that are accumulated and saved in the chat message storing area 121, and then saves the created file in the file storing area 123. More specifically, the controller 160 checks a video chat storing mode and then creates a file from the accumulated and saved chat messages of the chat message storing area 121 in response to the checked video chat storing mode. Here, the controller 160 temporarily stores the created file in a buffer. After that, if storage space exists in the file storing area 123, the controller 160 may move the file stored in the buffer to the file storing area 123.

For example, when the video chat storing mode is an automatic mode (i.e., a video chat automatic storing mode) and the detected save notification event is an accumulation save capacity excess notification signal, the controller 160 creates a file from the accumulated and saved chat messages and then automatically save the created file in the file storing area 123. Also, after creating files, the controller 160 accumulates chat messages that are successively sent or received and then saves them in the chat message storing area 121. Here, when an accumulation save capacity excess notification signal caused by the accumulated and saved chat messages is detected, the controller 160 once again creates a file from the accumulated and saved chat messages. Also, the controller 160 may combine the successively created files into a single file. The controller 160 performs a video call and transmits or receives a chat message through the wireless communication unit 110.

On the other hand, when the video chat storing mode is an automatic mode and the detected save notification event is a video call termination signal, the controller 160 creates a file from the accumulated and saved chat message and then automatically saves the created file in the file storing area 123. Here, when a save capacity excess notification signal is detected, the controller displays a notification text asking whether a previously saved file is to be deleted from the file storing area 123.

When a deletion permission signal is created by a user's selection information, the controller 160 sequentially deletes files stored in the file storing area 123, starting with the oldest files. After that, the controller 160 saves the newly created file in the file storing area 123. On the other hand, when a deletion rejection signal is created by the user's selection information, the controller 160 deletes the newly created file, and then terminates the video call.

As well, when the video chat storing mode is an automatic mode and the detected save notification event is a saving request signal, the controller 160 creates a file from the accumulated and saved chat messages and then automatically saves the created file in the file storing area 123. Here, the saving request signal is a signal input by a user's selection information. After that, the controller 160 performs a video call and transmits or receives a chat message through the wireless communication unit 110.

Also, when the video chat storing mode is a manual mode and the detected save notification event is an accumulation save capacity excess notification signal, the controller 160 may display a notification text asking whether the chat message is to be saved.

When a save permission signal is created by a user's selection information, the controller 160 creates a file from chat messages accumulated and saved in the chat message storing area 121 and then stores the created file in the file storing area 123. On the other hand, when a save rejection signal is created by user's selection information, the controller 160 deletes the accumulated and saved chat messages from the chat message storing area 121. After that, the controller 160 may perform a video call and transmit and/or receive the chat message through the wireless communication unit 110.

Also, when the video chat storing mode is a manual mode and the detected save notification event is a video call termination signal, the controller 160 displays a notification text asking whether the chat messages are to be saved, through the display 150.

Here, when a save permission signal is created by a user's selection information, the controller 160 creates a file from the accumulated and saved chat messages and then saves the created file in the file storing area 123. On the other hand, when a save rejection signal is created by a user's selection information, the controller 160 deletes the accumulated and saved chat messages from the chat message storing area 121, and then terminates the video call.

Also, when the video chat storing mode is a manual mode and the detected save notification event is a saving request signal, the controller 160 displays a notification text asking whether the chat messages are to be saved, through the display 150. When a save permission signal is generated by a user's selection information, the controller 160 creates a file from the accumulated and saved chat messages and then saves the created file in the file storing area 123. On the other hand, when a save rejection signal is created by a user's selection information, the controller 160 deletes the accumulated and saved chat messages from the chat message storing area 121. After that, the controller 160 performs a video call and transmits and receives chat messages through the wireless communication unit 110.

The input unit 170 is a user interface, and may be implemented with various input devices, such as a key pad, a touch screen, etc. The input unit 170 inputs a user operation signal to control operations of the mobile communication terminal 100. For example, the input unit 170 inputs a chat message saving request from a user during the transmission or reception of a chat message, and then sends a signal corresponding to the request to the controller 160. To generate the saving request signal, the input unit 170 may include a certain key, for example, an enter key or a hot key.

When inputting a video call termination request from a user during the transmission or reception of a chat message, the input unit 170 transmits a video call termination signal to the controller 160.

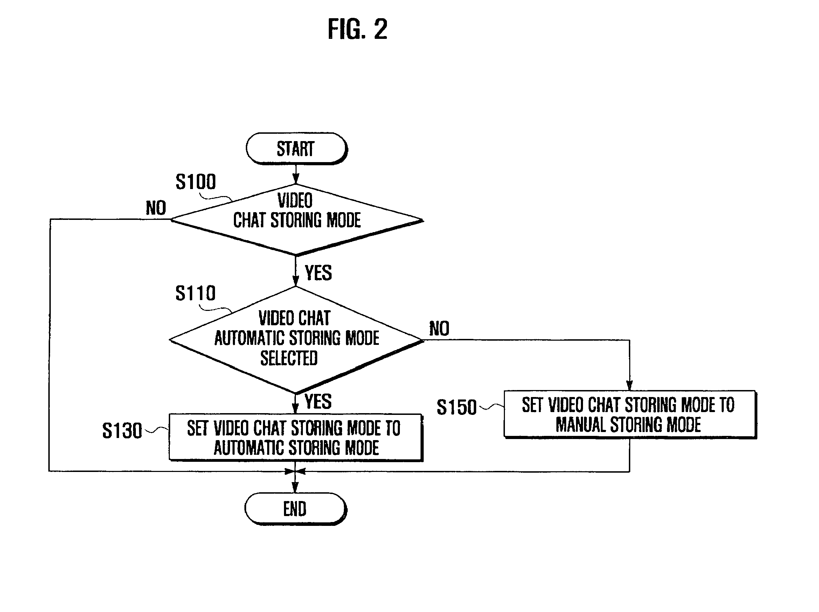

FIG. 2 is a flow chart describing a method for setting a video chat storing mode of a mobile communication terminal according to an exemplary embodiment of the present invention;

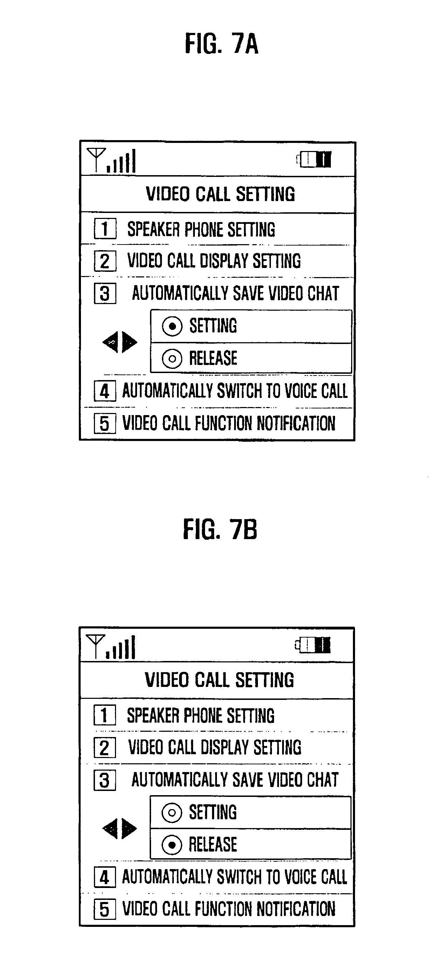

Referring to FIG. 1 and FIG. 2, the controller 160 determines whether the mobile communication terminal is in a video chat storing mode (S100). When the determination of S100 is positive, the controller 160 further determines whether a video chat automatic storing mode is selected (S110). When the determination of S110 is positive, the controller 160 sets the video chat storing mode to an automatic storing mode (S 130). Here, the setting method of the video chat automatic storing mode is shown in FIG. 7A.

Also, when the determination of S110 is negative, the controller 160 sets the video chat storing mode to a manual storing mode (S 150). The setting method of the video chat manual storing mode is shown in FIG. 7B.

On the other hand, when the determination of S100 is negative, the procedure ends.

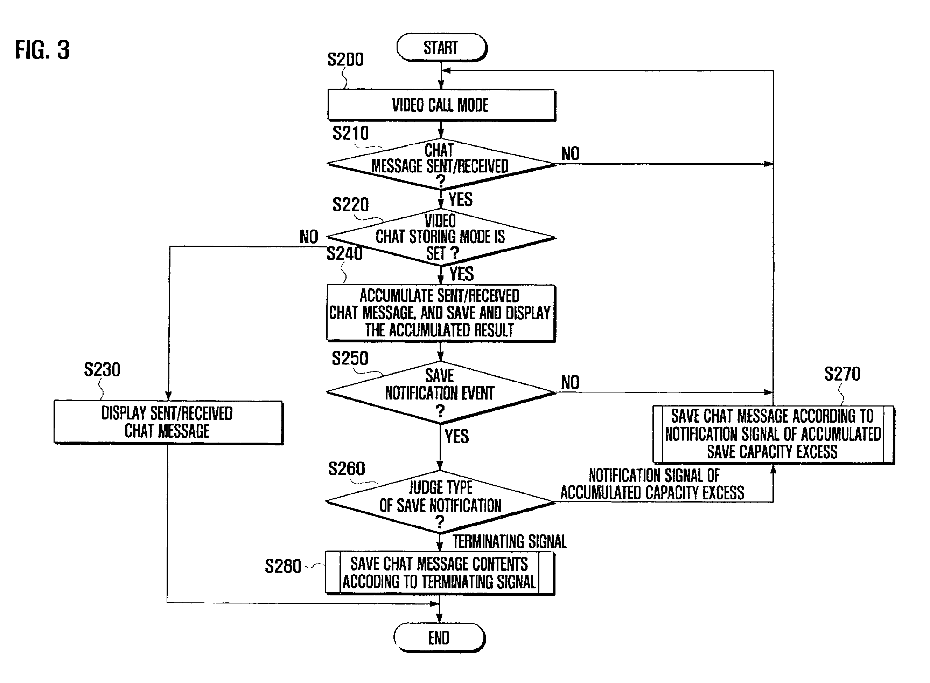

FIG. 3 is a flow chart describing a method for saving a chat message of a mobile communication terminal according to an exemplary embodiment of the present invention.

Referring to FIG. 1, FIG. 2, and FIG. 3, when the mobile communication terminal 100 is in a video call mode (S200), the controller 160 determines whether a chat message is to be sent or received through the wireless communication unit 110 (S210). When the determination of S210 is positive, the controller 160 determines whether the video chat storing mode is set (S220). When the determination of S220 is negative, the controller 160 displays the sent or received chat message (S230). In this case, the controller 160 does not save the sent or received chat message.

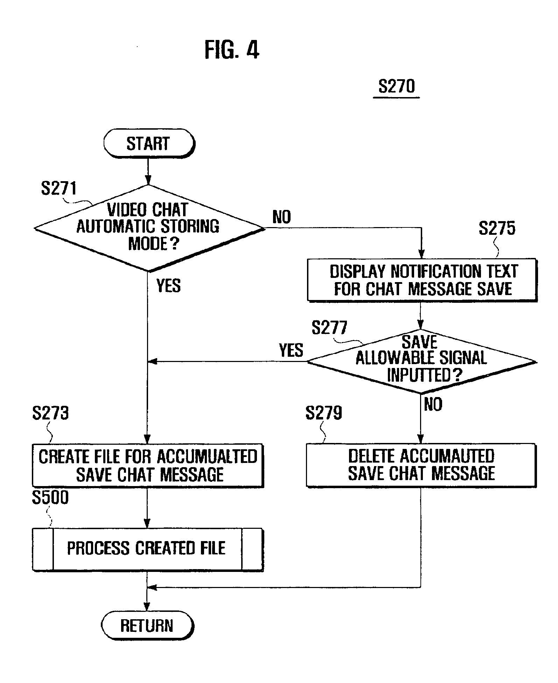

When the determination of S220 is positive, the controller 160 accumulates the sent and received chat messages and then saves them in the chat message storing area 121 (S240). Also, the controller 160 sequentially displays the accumulated and saved chat messages on the display 150. The controller 160 determines whether a save notification event is created while the chat message is sent or received (S250). When the determination of S250 is positive, the controller 160 judges the type of the save notification event (S260). When the created save notification event is an accumulation save capacity excess notification signal, the controller 160 saves the chat messages according to the accumulation save capacity excess notification signal (S270). Step S270 will be described in detail with reference to FIG. 4.

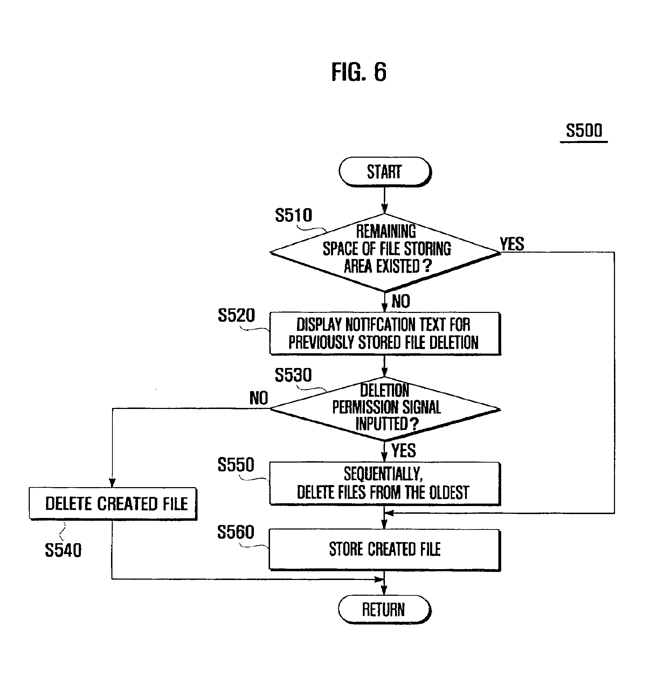

Referring to FIG. 4, the controller 160 judges a video chat storing mode (S271). When the video chat storing mode is an automatic mode, the controller 160 creates a file from the accumulated and saved chat messages (S273). Here, the controller 160 temporarily saves the created file in a buffer. After that, the controller 160 processes the created file (S500). Step S500 will be described in detail with reference to FIG. 6.

Referring to FIG. 6, the controller 160 checks a file storing area 123 and determines whether any remaining space for saving the created file exists (S510). When the determination of S510 is negative, the controller 160 displays a deletion notification text asking whether the files stored in the file storing area 123 are to be deleted (S520).

After that, the controller 160 determines whether a deletion permission signal has been input (S530). When the determination of S530 is negative, the controller 160 determines that the input signal is a deletion rejection signal, and then deletes the created files (S540). On the other hand, when the determination of S530 is positive, the controller 160 sequentially deletes files starting with the oldest files saved in the file storing area 123 (S550). After that, the controller 160 saves the new files, created through step S273 of FIG. 4, in the file storing area 123 (S560).

When the determination of S510 is positive (i.e. there is space remaining to save the created file), the controller 160 automatically save the files, created through step S273 of FIG. 4, in the file storing area 123 (S560). After that, the controller 160 accumulates chat messages that are successively sent and received s and then stores them in the chat message storing area 121. When the accumulated and saved chat messages exceed the capacity of the chat message storing area 121, the controller 160 creates a file from the accumulated and saved chat messages and then saves it in the file storing area 123. Here, the controller 160 may combine successively created files into a single file. Therefore, sent and received chat messages are saved during a video call and the saved chat messages may be checked at any time after the video call is terminated. Also, since the chat messages are created as a file and then stored in an additional storage box, they may be managed easily.

Referring to FIG. 4 again, when the determination of step S271 is negative (i.e. the video chat storing mode is not an automatic mode), the controller 160 determines that the video chat storing mode is a manual storing mode, and displays an inquiry notification text asking whether the chat messages are to be stored, through the display 150 (S275). After that, the controller 160 further determines whether the save permission signal is created (S277). When the determination of S277 is negative, the controller 160 deletes the chat messages accumulated and saved in the chat message storing area 121 (S279).

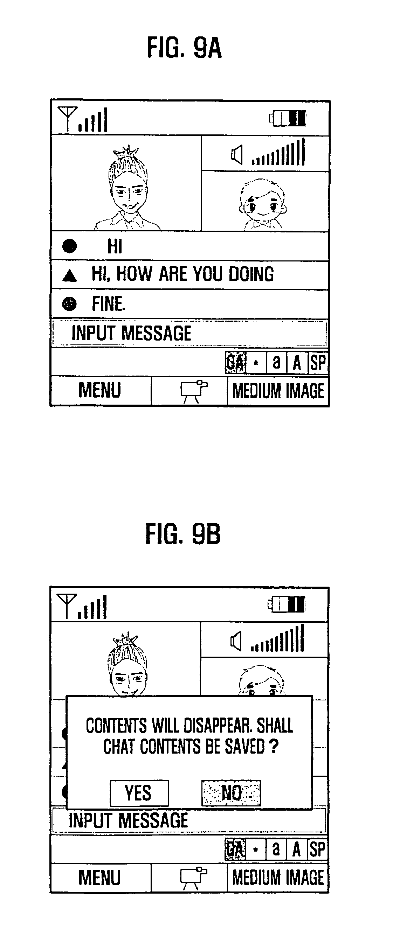

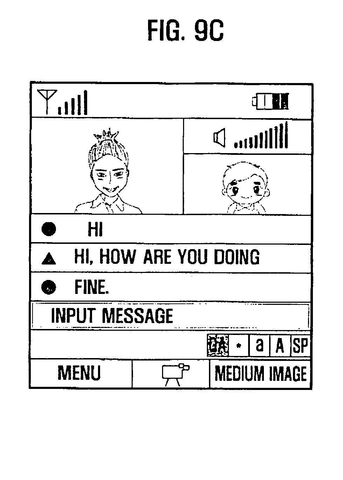

Here, steps S271 to S279 may be implemented on the display as follows. The chat message is sent or received and then displayed as shown in FIG. 9A. When the storage capacity is exceeded, a chat message save notification text is displayed, as shown in FIG. 9B. Here, when a save rejection signal is input, the accumulated and saved chat messages are deleted and chat messages are successively sent and received as shown in FIG. 9C.

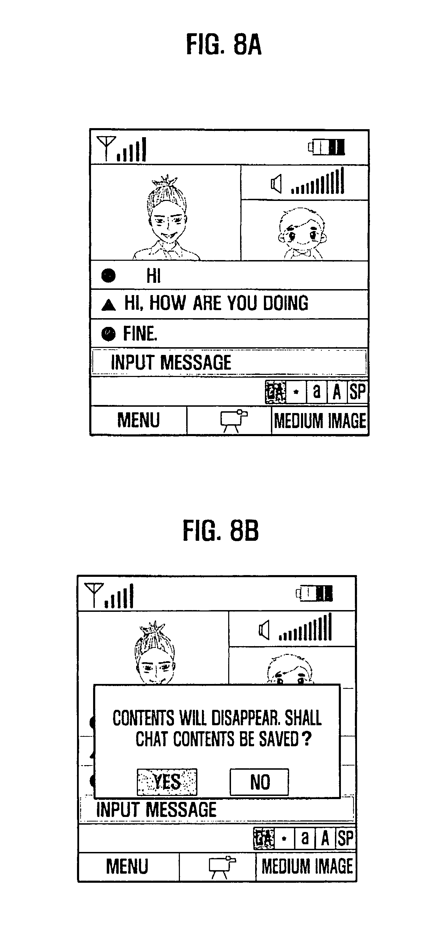

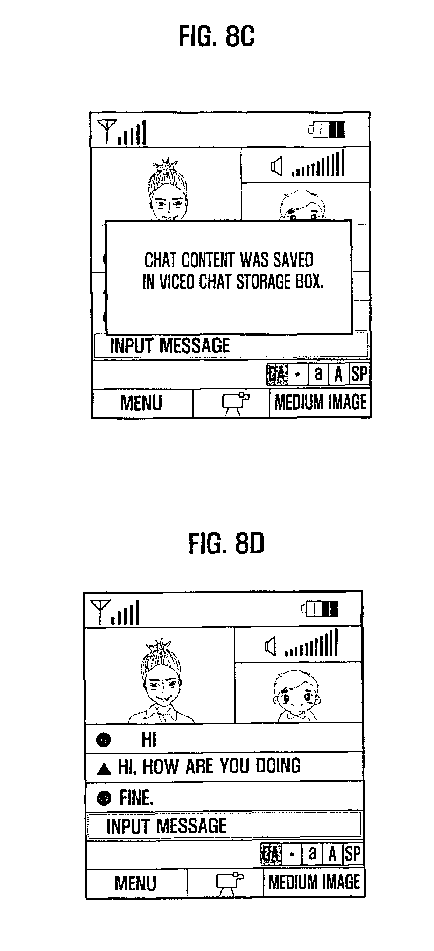

When the determination of S277 is positive, or the save permission signal is detected, the controller 160 proceeds with step S273. For example, the controller transmits /or receives the chat message and then displays it as shown in FIG. 8A. When the chat messages exceed the storage capacity, the controller 160 displays a chat message save notification text as shown in FIG. 8B. Here, when the save permission signal is input, the controller 160 creates a file from the chat messages as shown in FIG. 8C and then stores it in a video chat storage box. After that, as shown in FIG. 8D, chat messages are again successively sent and received.

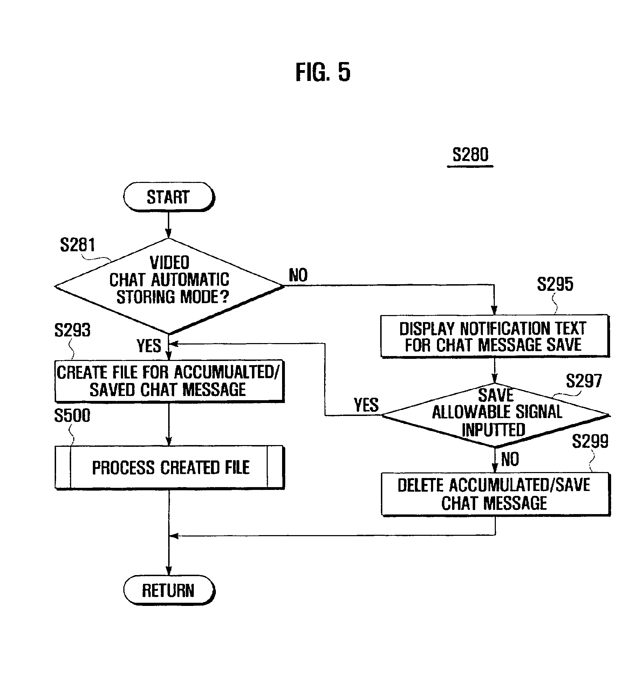

Referring to FIG. 3 again, from the determination of step S260, when the created save notification event is a video call termination signal, the controller 160 stores the chat message according to the video call termination signal (S280). Step S280 will be described in detail with reference to FIG. 5.

Referring to FIG. 5, the controller 160 determines whether the video chat storing mode is an automatic storing mode (S281). When the determination of S281 is positive, the controller 160 creates a file from the chat messages accumulated and saved in the chat message storing area 121 (S283). After that, the controller 160 processes the created file (S500), as described above with reference to FIG. 6.

On the other hand, when the determination of S281 is negative (i.e. the video chat save mode is not an automatic storing mode), the controller 160 determines that the video chat storing mode is a manual storing mode and then displays a chat message save notification text through the display 150 (S295). After that, the controller 160 determines whether a save permission signal is input (S297). When the determination of S297 is positive, the controller 160 proceeds with step S293.

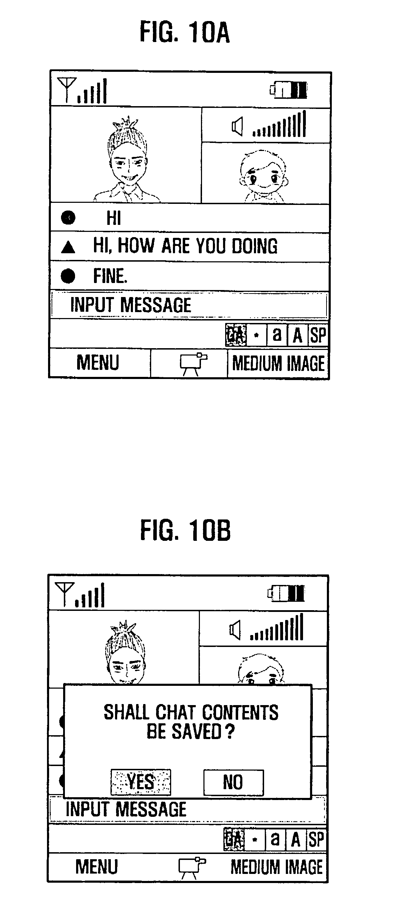

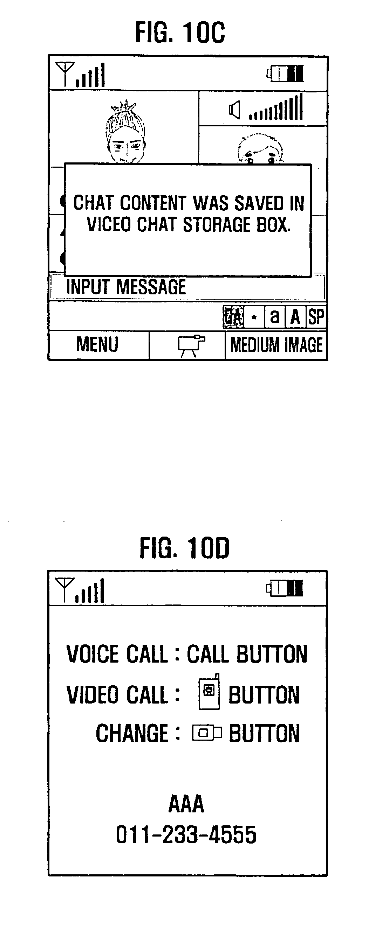

For example, the chat message is sent or received and then displayed, as shown in FIG. 10A. When the video call termination signal is input, a chat message save notification text is displayed as shown in FIG. 10B. When the save permission signal is created, the controller 160 creates a file from the accumulated and saved chat messages and then saves it in the video chat storage box, as shown in FIG. 10C. After that, a video call termination display is displayed as shown in FIG. 10D.

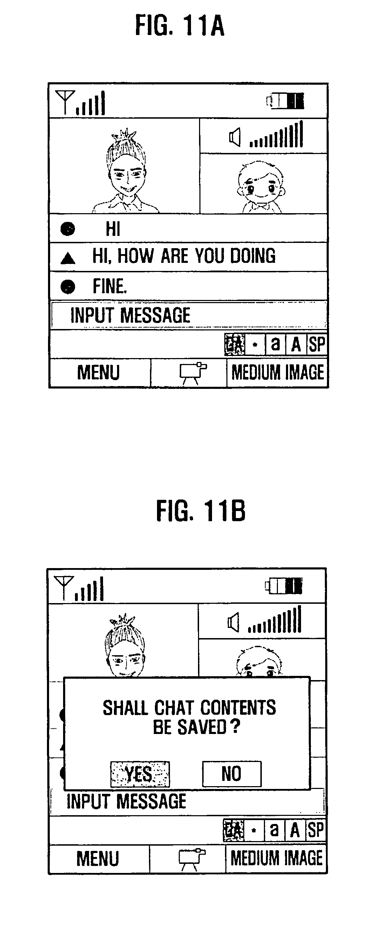

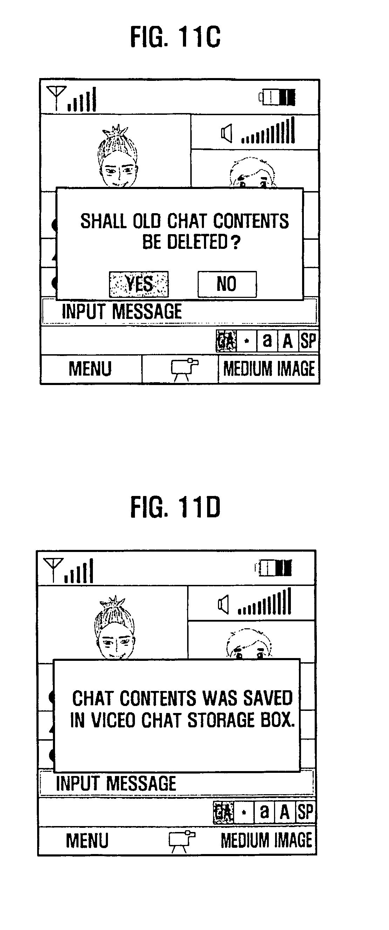

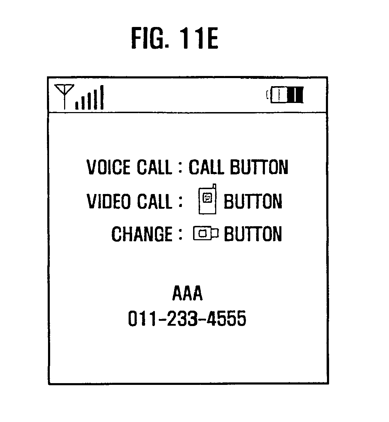

For another example, a chat message is sent or received and then displayed, as shown in FIG. 11A. When the video call termination signal is input, a chat message save notification text is displayed, as shown in FIG. 11B. When the save permission signal is created, the controller 160 creates a file from the chat message and then judges the file storing area 123. When the file storing area 123 does not have any remaining space, a notification text indicating the deletion of saved files is displayed as shown in FIG. 11C. After that, when the deletion permission signal is input, the files previously stored in the video chat storage box are deleted and the created file is saved in the same manner as shown in FIG. 11D. After that, as shown in FIG. 11 E, a video call termination display is displayed.

As well, when the determination of S297 is negative (i.e. the save permission signal is not input), the controller 160 determines that the save rejection signal is input and deletes accumulated and saved chat messages from the chat message storing area 121 (S299).

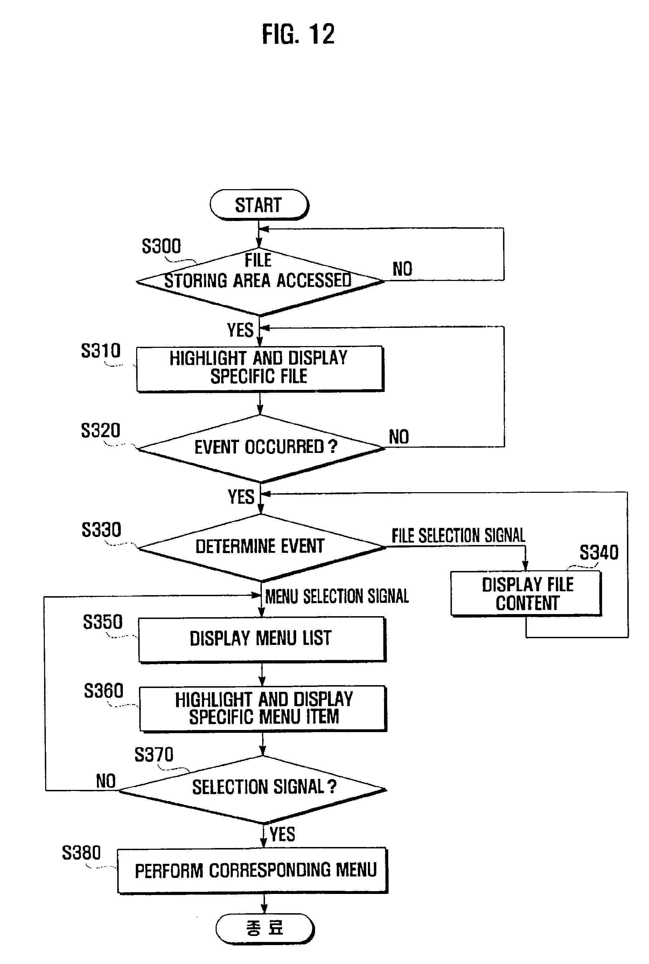

FIG. 12 is a flow chart describing a method for accessing a menu of a video chat storage box.

Referring to FIG. 1 and FIG. 12, the controller 160 determines whether access to the file storing area 123 is performed in response to a user's selection signal (S300). When the determination of step S300 is positive, the controller 160 highlights a specific file based on a user's selection information (S310). Here, it will be appreciated that the highlighted indicator moves according to a user's selection information. After that, the controller 160 determines whether an event occurs (S320). When the event occurs, the controller 160 judges the type of event (S330). When the event is a menu selection signal, the controller 160 displays a menu list including at least one or more menu items (S350). After that, a certain item on the menu list is highlighted (S360). The controller 160 determines whether a selection signal is input to the highlighted menu item (S370). When the selection signal is input, the controller 160 displays a corresponding menu (S380).

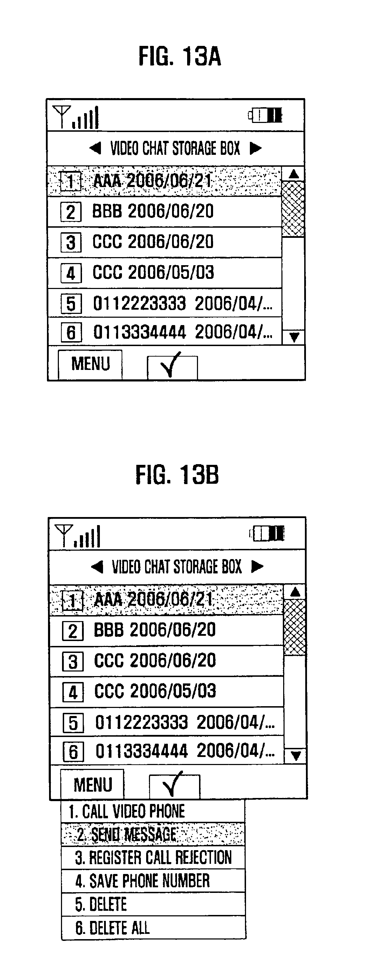

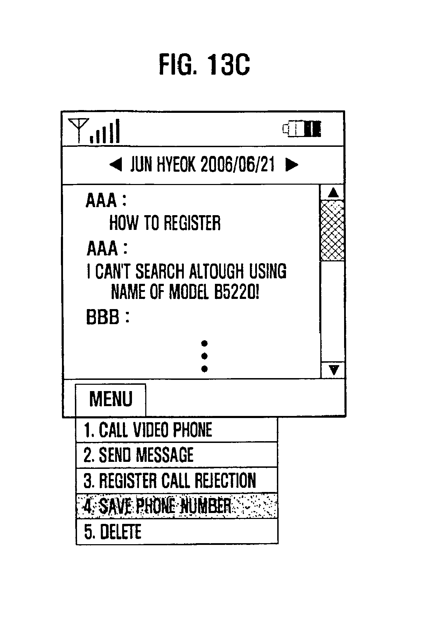

The following is a description of a display implemented through the steps S300 to S380. When a user accesses a video chat storage box, the saved files are displayed as a list, as shown in FIG. 13A. Here, the files saved in the video chat storage box may be sorted in descending order according to their saved time. When a certain file on the list is highlighted and then a menu selection signal is input, a menu list showing at least one or more menu items is displayed, as shown in FIG. 13B. For example, when a menu item "2. SEND MESSAGE" is selected, the present display is changed into the message edit display.

As well, when the type of the event created in step S330 is a file selection signal, the controller 160 displays the content of the file (S340), for example, a chat message of a corresponding file.

The following is a description of a display implemented through the steps S300 to S340. When files saved in a video chat storage box are displayed as a list and then a signal is input to select a highlighted certain file on the list, a chat message of the selected file is displayed as shown in FIG. 13C. Here, when a menu selection signal is input, a menu list including at least one or more menu items is displayed. For example, when menu item "4. SAVE PHONE NUMBER" is selected, the present display changes to a phone number save menu display.

As described in the foregoing, the present invention saves chat messages sent and received during a video call, thereby allowing users to check them at their convenience. Also, the present invention saves the chat messages as files, which may allow users to manage the chat messages more easily.

It will be apparent to those skilled in the art that various modifications and variations can be made in the present invention without departing from the spirit or scope of the invention. Thus, it is intended that the present invention cover the modifications and variations of this invention provided they come within the scope of the appended claims and their equivalents.

## Claims

1. A mobile communication terminal for performing video chat, comprising:
a wireless communication unit to send and receive chat messages during video calling;
a storage unit to save the sent and received chat messages;
a display to display the saved chat messages; and
a controller to create a file from the saved chat messages when a save notification event is detected while chat messages are being sent and received.

2. The terminal of claim 1, wherein the created file is saved in the storage unit.

3. The terminal of claim 1, wherein the save notification event is one of an accumulation save capacity excess notification signal, a video call termination signal, and a saving request signal.

4. The terminal of claim 1, wherein the controller creates the file from the saved chat messages through a video chat storing mode.

5. The terminal of claim 4, wherein the video chat storing mode is a video chat automatic storing mode or a video chat manual storing mode.

6. The terminal of claim 3, wherein the controller creates the file from the saved chat messages and automatically saves the created file to the storage unit when the detected save notification event is the accumulation save capacity excess notification signal.

7. The terminal of claim 6, wherein the controller saves additional chat messages that are successively sent and received after creating the file, and creates an additional file from the saved additional chat messages when the saved additional chat messages exceed the storage capacity of a chat message storing area.

8. The terminal of claim 7, wherein the controller combines the created file and the additional created file into a single file.

9. The terminal of claim 3, wherein the controller creates the file from the saved chat messages and saves it in the storage unit when the detected save notification event is the video call termination signal.

10. The terminal of claim 1, wherein the controller displays a notification text asking whether the files previously stored in the storage unit are to be deleted when a save capacity excess notification signal of a file storing area of the storage unit is detected.

11. The terminal of claim 10, wherein the controller sequentially deletes files in response to a deletion permission signal starting with the files that have been stored in the storage unit the longest.

12. The terminal of claim 3, wherein the controller creates the file from the saved chat messages after receiving a save permission signal when the detected save notification event is the accumulation save capacity excess notification signal.

13. The terminal of claim 3, wherein the controller creates a file from the saved chat messages after receiving a save permission signal when the detected save notification event is the video call termination signal.

14. A method for saving video chat messages of a mobile communication terminal, comprising:
saving chat messages sent and received during video calling;
creating a file from the saved chat messages when a save notification event occurs during the transmission or reception of the chat messages; and
saving the created file.

15. The method of claim 14, wherein the save notification event is one of an accumulation save capacity excess notification signal, a video call termination signal, and a saving request signal.

16. The method of claim 14, wherein saving the created file comprises creating the file from the saved chat messages through a video chat storing mode.

17. The method of claim 16, wherein the video chat storing mode is a video chat automatic storing mode or a video chat manual storing mode.

18. The method of claim 15, wherein saving the created file serves to create a file from the accumulated and saved chat messages and automatically saves it when the detected save notification event is the accumulation save capacity excess notification signal.

19. The method of claim 14, wherein saving the created file comprises:
saving additional chat messages that are successively sent and received after creating the file; and
creating an additional file from the saved additional chat messages when the saved additional chat messages exceed the storage capacity of a chat message storing area.

20. The method of claim 19, wherein saving the created file further comprises combining the created file and the additional created file into a single file.

21. The method of claim 15, wherein saving the created file comprises creating and saving a file from the saved chat messages when the detected save notification event is the video call termination signal.

22. The method of claim 15, saving the created file comprises displaying a notification text to inquire whether the previously stored files are to be deleted, when a storage capacity excess notification signal of a file storing area is detected.

23. The method of claim 22, wherein saving the created file comprises sequentially deleting files in response to a deletion permission signal starting with the files that have been stored in the storage unit the longest.

24. The method of claim 15, wherein saving the created file comprises creating a file from the saved chat messages after receiving a save permission signal when the detected save notification event is the accumulation save capacity excess notification signal.

25. The method of claim 15, wherein saving the created file comprises creating a file from the saved chat messages after receiving a save permission signal when the detected save notification event is the video call termination signal.
